# EUROPÄISCHE PATENTSCHRIFT

(11) **EP 1 249 332 B1**
(45) Veröffentlichungstag und Bekanntmachung des Hinweises auf die Patenterteilung: **12.04.2006**
(21) Anmeldenummer: 02450050.6
(22) Anmeldetag: 08.03.2002
(51) Int. Cl.: B29C 47/90

(54) **Vorrichtung zum Kühlen und Kalibrieren eines extrudierten Kunststoffprofils**
Apparatus for cooling and calibrating an extruded plastic profile
Dispositif de refroidissement et de calibrage de profilés en matière plastique extrudés

(30) Priorität: 09.04.2001 AT 2001565
(43) Veröffentlichungstag der Anmeldung: 16.10.2002
(73) Patentinhaber: A + G Extrusion Technology GmbH, 4061 Pasching (AT)
(72) Erfinder: Gasselseder, Wolfgang, 4181 Oberneukirchen (AT); Pramberger, Siegried, 4655 Vorchdorf (AT); Krumböck, Erwin Dr., 4052 Ansfelden (AT)
(74) Vertreter: Hübscher, Helmut

(56) Entgegenhaltungen:
- DE-A- 1 504 364
- DE-B- 1 157 378
- DE-B- 1 201 038
- US-A- 2 423 260
- US-A- 2 903 743
- US-A- 3 958 913

## Beschreibung

Die Erfindung bezieht sich auf eine Vorrichtung zum Kühlen und Kalibrieren eines extrudierten Kunststoffprofils mit einem eine Kühlflüssigkeit aufnehmenden Kühltank, mit innerhalb des Kühltanks mit Abstand voneinander angeordneten Kalibrierblenden für das durch ein Kühlflüssigkeitsbad im Kühltank gezogene Kunststoffprofil und mit einer dem Kühltank in Abzugsrichtung des Kunststoffprofils nachgeordneten Abzugseinrichtung.

Beim Extrudieren von Kunststoffprofilen wird der aus der formgebenden Profildüse austretende, heiße Profilstrang kalibriert und gekühlt, wobei zum Abkühlen ein Kühltank vorgesehen wird, durch den das Kunststoffprofil mit Hilfe einer dem Kühltank nachgeordneten Abzugseinrichtung gezogen wird. Innerhalb des Kühltanks wird das Kunststoffprofil mit einer Kühlflüssigkeit, im allgemeinen Wasser, besprüht oder durch ein Kühlflüssigkeitsbad gezogen. Durch innerhalb des Kühltanks mit gegenseitigem Abstand angeordnete Kalibrierblenden wird dabei die Maßhaltigkeit des durch diese Kalibrierblenden gezogenen Kunststoffprofils sichergestellt. Aufgrund nicht eindeutig geklärter Umstände kann es fallweise zu mit Profilschwingungen einhergehenden Markierungen auf dem Kunststoffprofil kommen, die quer zur Abzugsrichtung des Kunststoffprofils verlaufen und sich vor allem durch Glanzunterschiede im Oberflächenbereich bemerkbar machen.

Zur Formgebung eines aus dem Extrudermundstück austretenden Profilstranges ist es bekannt (DE 1 157 378 B), dem Extrudermundstück eine Kalibrierdüse unmittelbar nachzuordnen, die in einem wassergekühlten Gehäuse angeordnet ist. Zwischen der Kalibrierdüse und einer Walzenabzugseinrichtung ist ein Kühltank vorgesehen, in dem das Kunststoffprofil einer Kühlflüssigkeit ausgesetzt wird, allerdings ohne Kalibrierung, so daß keine höheren Anforderungen an die Maßhaltigkeit der Kunststoffprofile gestellt werden können.

Um aus einem mit einem Kreisquerschnitt extrudierten, hohlen Profilstrang aus Kunststoff beispielsweise ein Flachrohr herzustellen, kann das Hohlprofil schrittweise verformt werden, und zwar mit Hilfe von plattenförmigen Ziehwerkzeugen, die mit Abstand voneinander in Ziehrichtung angeordnet sind und eine sich der Endform schrittweise nähernde, formgebende Kontur aufweisen (US 2 423 260 A). Da diese schrittweise Umformung des von innen mit Druckluft beaufschlagten Profilstranges unter der Einwirkung der Kühlflüssigkeit vorgenommen wird, wird am Ausgang des Ziehwerkzeuges ein entsprechend formstabiles Hohlprofil erhalten, das jedoch keiner weiteren Kalibrierung unterworfen wird.

Schließlich ist es bei mit Vakuum beaufschlagbaren Kalibrierdüsen bekannt (DE 1 201 038 B), den formgebenden Düsenkörper aus einzelnen Ringkörpern zusammenzusetzen, zwischen denen Schlitze zur Beaufschlagung des Profilstranges mit Vakuum freigelassen werden. Zur Abdichtung gegenüber einer Kühlflüssigkeit wird die Kalibrierdüse mit einem Simmering abgeschlossen. Der Kalibrierdüse können mit axialem Abstand weitere Simmeringe nachgeordnet werden. Diese Simmeringe können jedoch nur Führungsaufgaben, nicht aber Kalibrierfunktionen übernehmen.

Da diese bekannten, konstruktiv unterschiedlich aufgebauten Extruderanlagen keine nachgeschaltete Kalibrierung mit Hilfe von in einem Kühltank angeordneten Kalibierblenden aufweisen, können diese Extruderanlagen auch keine Anregung dafür geben, wie Markierungen eines Kunststoffprofils zufolge einer solchen nachgeschalteten Kalibrierung vermieden werden können.

Der Erfindung liegt somit die Aufgabe zugrunde, eine Vorrichtung zum Kühlen und Kalibrieren eines extrudierten Kunststoffprofils der eingangs geschilderten Art so auszugestalten, daß solche fallweise auftretenden Markierungen unterdrückt werden können.

Die Erfindung löst die gestellte Aufgabe dadurch, daß zwischen der zulaufseitigen Kalibrierblende des Kühltanks und der Abzugseinrichtung wenigstens eine zumindest abschnittsweise im Bereich eines Umfangs am Kunststoffprofil anliegende, Longitudinalschwingungen des Kunststoffprofils dämpfende Dämpfungseinrichtung vorgesehen ist, die aus zwei unmittelbar aufeinanderfolgenden, gegeneinander quer zum Kunststoffprofil versetzten oder um eine Längsachse des Kunststoffprofils winkelversetzten Kalibrierblenden, aus zwei das Kunststoffprofil zwischen sich führenden Dämpfungsrollen oder aus einer Kalibrierblende besteht, an die am Kunststoffprofil anliegende Dämpfungskörper angesetzt sind

Der Erfindung liegt die Erkenntnis zugrunde, daß die feinen, hauptsächlich an den Außenflächen des Kunststoffprofils auftretenden Markierungen im Gegensatz zu "Rattermarken" nicht von ungünstigen Reibungsverhältnissen zwischen den Kalibrierblenden und dem Kunststoffprofil abhängen, sondern von einer Schwingungsanregung des zwischen der Abzugseinrichtung und den Kalibrierblenden ähnlich einer Saite eingespannten Kunststoffprofils. Diese möglicherweise auch durch Resonanzerscheinungen angeregten Schwingungen, im wesentlichen Longitudinalschwingungen, des Kunststoffprofils im Bereich zwischen den durch die Abzugseinrichtung und die Kalibrierblenden gebildeten Einspannstellen lassen sich durch Dämpfungseinrichtungen zumindest in einem Ausmaß dämpfen, das Oberflächenmarkierungen am Kunststoffprofil ausschließt. Die Dämpfungseinrichtung muß zumindest abschnittsweise im Bereich eines Umfangs am Kunststoffprofil anliegen, damit solche Schwingungen des Kunststoffprofils unterdrückt werden können. Die jeweils günstigsten Dämpfungseigenschaften können für eine Dämpfungseinrichtung dann ausgenützt werden, wenn sie im Bereich der größten Schwingweite, also im wesentlichen mittig zwischen Knotenpunkten vorgesehen wird.

Die Dämpfungseinrichtungen können sehr unterschiedlich gestaltet werden, weil es lediglich um eine Unterdrückung der Längsschwingungen des Kunststoffprofils geht. Soll eine Dämpfungseinrichtung innerhalb des Kühltanks vorgesehen werden, so ist unter Umständen eine durch die Dämpfungseinrichtung mögliche Verformung des Kunststoffprofils zu berücksichtigen. Um die geforderte Maßhaltigkeit des Kunststoffprofils zu gewährleisten, kann in einem solchen Fall die Dämpfungseinrichtung aus zwei unmittelbar aufeinanderfolgenden, gegeneinander quer zum Kunststoffprofil versetzten Kalibrierblenden bestehen, die einer unzulässigen Verformung des Kunststoffprofils entgegenwirken. Diese Kalibrierblenden können aber auch gegeneinander um eine Längsachse des Kunststoffprofils verdreht werden, um eine Schwingungen des Kunststoffprofils unterdrückende Profilführung zu erreichen. Das Kalibrierblendenpaar einer Dämpfungseinrichtung kann selbstverständlich auch an die Stelle einer sonst vorzusehenden Kalibrierblende treten.

Damit die Dämpfungseinrichtung unabhängig von einer genauen Einstellung satt am Kunststoffprofil anliegt, kann zumindest eine der Kalibrierblenden der Dämpfungseinrichtung in Richtung ihrer Versetzung gegenüber der anderen Kalibrierblende federnd beaufschlagt werden. Durch solche federnde Beaufschlagungen der Kalibrierblenden der Dämpfungseinrichtung kann auch ein allenfalls auftretender Verschleiß einfach ausgeglichen werden.

Eine andere Möglichkeit der konstruktiven Ausgestaltung der Dämpfungseinrichtung besteht darin, zwei das Kunststoffprofil zwischen sich führende Dämpfungsrollen vorzusehen, die ebenfalls eine allfällige Längsschwingung des Kunststoffprofils unterdrücken, insbesondere wenn diese Dämpfungsrollen mit einer gummielastischen Laufschicht am Kunststoffprofil anliegen. Solche Dämpfungsrollen werden vor allem zwischen der Abzugseinrichtung und dem Kühltank eingesetzt werden, also in einem Bereich, in dem das Kunststoffprofil bereits eine ausreichende Eigenfestigkeit aufweist. Um eine für die Schwingungsdämpfung ausreichende Anstellkraft unabhängig von allfälligen Toleranzen zu erreichen, können die Dämpfungsrollen wiederum federnd an das Kunststoffprofil angedrückt werden.

Eine weitere Möglichkeit, für eine wirksame Dämpfung auftretender Schwingungen zu sorgen, ergibt sich, wenn die Dämpfungseinrichtung aus einer Kalibrierblende besteht, an die am Kunststoffprofil anliegende Dämpfungskörper angesetzt sind. Besonders vorteilhafte Eigenschaften hinsichtlich der Schwingungsdämpfung können in diesem Zusammenhang dadurch erhalten werden, daß die Dämpfungskörper zumindest im Bereich der Anlage am Kunststoffprofil aus einem von der zugehörigen Kalibrierblende unterschiedlichen Werkstoff bestehen, was über die sich ändernden Reibungsverhältnisse die Dämpfungseigenschaften unterstützt. Selbstverständlich können auch diese an bestehende Kalibrierblenden ansetzbare Dämpfungskörper federnd an das Kunststoffprofil angedrückt werden, und zwar mit vergleichbaren Vorteilen.

Üblicherweise werden Dämpfungseinrichtungen starr auf ihren Trägern angeordnet. Es kann aber unter Umständen vorteilhaft sein, die Dämpfungseinrichtungen über Federkörper auf ihren Trägern abzustützen, so daß sich beispielsweise ein geändertes Eigenschwingungsverhalten von Kunststoffprofil und Dämpfungseinrichtung mit der Wirkung ergibt, daß zu Markierungen am Kunststoffprofil führende Resonanzschwingungen des Kunststoffprofils unterdrückt werden.

In der Zeichnung ist der Erfindungsgegenstand beispielsweise dargestellt. Es zeigen
- Fig. 1: eine erfindungsgemäße Vorrichtung zum Kalibrieren und Kühlen eines extrudierten Kunststoffprofils in einem schematischen Längsschnitt,
- Fig. 2: eine erfindungsgemäße Dämpfungseinrichtung in einem Schnitt durch eine Längsachse des Kunststoffprofils in einem größeren Maßstab,
- Fig. 3: die Dämpfungseinrichtung nach der Fig. 2 in einer Seitenansicht, jedoch mit einer federnden Abstützung gegenüber einem Träger,
- Fig. 4: eine Konstruktionsvariante einer erfindungsgemäßen Dämpfungseinrichtung in einer Ansicht in Längsrichtung des Kunststoffprofils,
- Fig. 5: eine weitere Ausführungsform einer erfindungsgemäßen Dämpfungseinrichtung in einem Schnitt durch eine Längsachse des Kunststoffprofils und
- Fig. 6: eine weitere abgewandelte Ausführungsform einer erfindungsgemäßen Dämpfungseinrichtung in einem Schnitt entlang einer Längsachse des Kunststoffprofils.

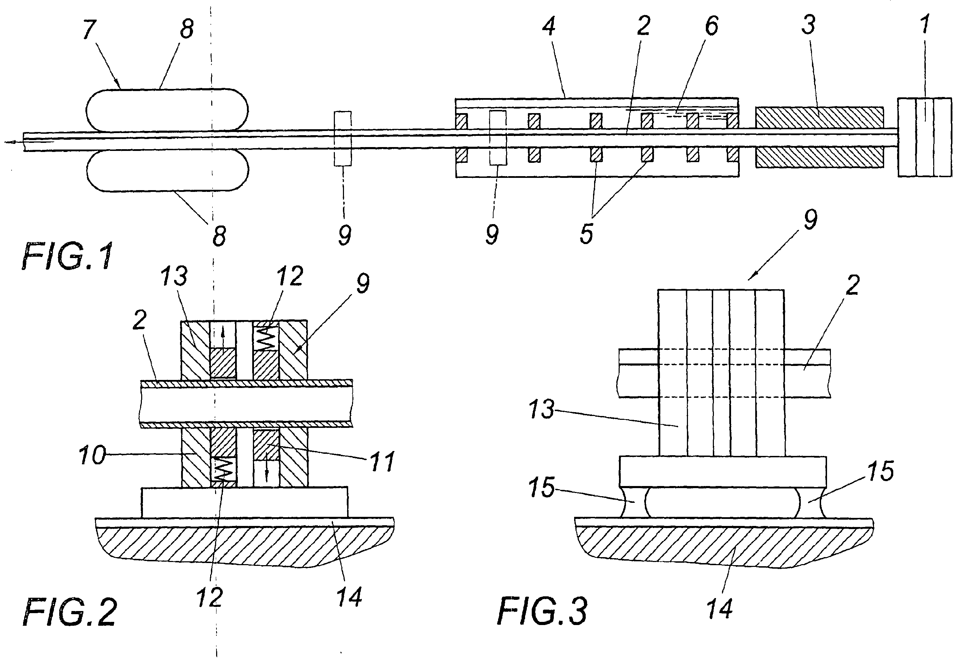

Wie der Fig. 1 entnommen werden kann, wird das aus einer Profildüse 1 im Anschluß an einen Extruder austretende, heiße Kunststoffprofil 2 durch eine Kalibriereinrichtung 3 gezogen, bevor es einen Kühltank 4 durchläuft, in dem mit Abstand voneinander angeordnete Kalibrierblenden 5 vorgesehen sind, um die Maßhaltigkeit des Kunststoffprofils 2 auch beim Abkühlen sicherzustellen. Die Kalibrierblenden 5 müssen daher so ausgebildet werden, daß das abkühlungsbedingte Schrumpfen des Kunststoffprofils 2 berücksichtigt wird. Die zum Kühlen des Kunststoffprofils 2 eingesetzte Kühlflüssigkeit ist üblicherweise Wasser, wobei das Kunststoffprofil 2 durch ein Kühlflüssigkeitsbad 6 im Kühltank 4 gezogen wird. Zum Abzug des Kunststoffprofils 2 aus dem Kühltank 4 dient eine Abzugseinrichtung 7, die das Kunststoffprofil 2 in herkömmlicher Weise mit Hilfe von umlaufenden Raupen 8 erfaßt.

Um fallweise auftretende Schwingungen des Kunststoffprofils 2 zufolge seiner Einspannung einerseits im Raupenabzug 7 und anderseits in den Kalibrierblenden 5 bzw. der Kalibriereinrichtung 3 zumindest auf ein Maß zu unterdrücken, das sichtbare Marken auf der Oberfläche des Kunststoffprofils 2 ausschließt, werden je nach Bedarf Dämpfungseinrichtungen 9 eingesetzt, die die allenfalls auftretenden Schwingungen zumindest auf eine zulässige Größe verringern. Solche Dämpfungseinrichtungen werden daher vorzugsweise im Bereich zwischen dem Kühltank 4 und der Abzugseinrichtung 7, aber auch im Kühltank 4, vorzugsweise im auslaufseitigen Drittel, vorgesehen.

Wie den Fig. 2 bis 6 entnommen werden kann, kann die konstruktive Ausgestaltung der Dämpfungseinrichtungen sehr unterschiedlich ausfallen, weil es lediglich darauf ankommt, die Schwingungen des Kunststoffprofils 2 insbesondere in Längsrichtung entsprechend zu verringern. Wird eine Dämpfungseinrichtung 9 im Bereich des Kühltanks 4 vorgesehen, so empfiehlt sich eine Ausgestaltung der Dämpfungseinrichtung in Form einer Kalibrierblende, um die Maßhaltigkeit des Kunststoffprofils 2 nicht zu gefährden. Die Blendenform der Dämpfungseinrichtung 9 kann aber selbstverständlich auch außerhalb des Kühltanks eingesetzt werden. Die Fig. 2 und 3 zeigen solche Dämpfungseinrichtungen, die aus zwei unmittelbar benachbarten Kalibrierblenden 10 und 11 bestehen, die quer zum Kunststoffprofil 2 gegeneinander versetzt sind, wie dies in der Fig. 2 durch Pfeile angedeutet wird. Da die Kalibrierblenden 10 und 11 von einander gegenüberliegenden Seiten an das Kunststoffprofil 2 angestellt sind, können durch dieses Kalibrierblendenpaar 10 und 11 Längsschwingungen des Kunststoffprofils 2 wirksam unterdrückt werden. Zum Ausgleich von Toleranzen und Verschleißerscheinungen kann wenigstens eine der beiden Kalibrierblenden 10, 11 durch eine Feder 12 in Richtung der gegenseitigen Versetzung der beiden Kalibrierblenden 10 und 11 federnd beaufschlagt sein.

Die Dämpfungseinrichtung 9 gemäß der Fig. 3 unterscheidet sich von der nach der Fig. 2 lediglich dadurch, daß das die beiden Kalibrierblenden 10 und 11 aufnehmende Gehäuse 13 nicht starr mit einem Träger 14 verbunden ist, sondern gegenüber diesem Träger 14 durch Federkörper 15 abgestützt wird, so daß die Dämpfungseinrichtung 9 Teil des durch das Kunststoffprofil 1 bestimmten Schwingungssystems wird, und zwar mit der Folge, daß sich die Eigenschwingungen des Schwingungssystems verlagern, was zu einer ausreichenden Verringerung der für das Auftreten von Markierungen am Kunststoffprofil 1 maßgebenden Schwingungsamplituden führen kann.

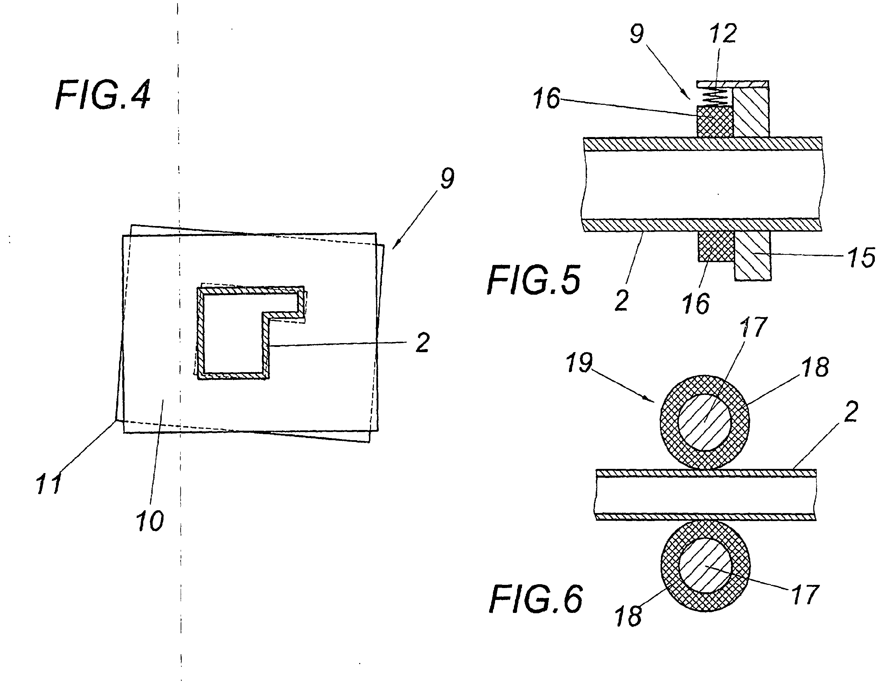

Die Dämpfungseinrichtung 9 gemäß der Fig. 4 benützt ebenfalls ein Kalibrierblendenpaar, doch werden die Kalibrierblenden 10, 11 gegeneinander um eine Längsachse des Kunststoffprofils 2 verschwenkt. Das Kunststoffprofil 2 wird zwischen diesen Kalibrierblenden 10 und 11 wieder formschlüssig verspannt, was die angestrebte Unterdrückung von Längsschwingungen des Kunststoffprofils 2 zur Folge hat, ohne eine die Maßhaltigkeit des Kunststoffprofils 2 gefährdende Verformung des Kunststoffprofils 2 befürchten zu müssen.

Nach der Fig. 5 besteht die Dämpfungseinrichtung 9 aus einer der im Kühltank 4 vorgesehenen Kalibrierblenden 5, an die am Kunststoffprofil 2 anliegende Dämpfungskörper 16 angesetzt sind. Diese DämptungsKörper 16 bestehen vorzugsweise aus einem gegenüber der Kalibrierblende 5 unterschiedlichen Werkstoff, um unterschiedliche Reibungsverhältnisse gegenüber dem Kunststoffprofil 2 zu erzielen, wodurch die angestrebte Schwingungsdämpfung unterstützt wird. Von den Dämpfungskörpern 16 kann wiederum zumindest einer durch eine Feder 12 gegen das Kunststoffprofil 2 gedrückt werden.

Schließlich zeigt die Fig. 6 eine Dämpfungseinrichtung 9, die aus zwei das Kunststoffprofil 2 zwischen sich führenden Dämpfungsrollen 17 besteht, die über die Längsschwingungen des Kunststoffprofils 2 zu Drehschwingungen angeregt werden. Aufgrund der unterschiedlichen Eigenfrequenz der Dämpfungsrollen 17 ergibt sich eine wirksame Dämpfung der Schwingen des Kunststoffprofils 2. Die Dämpfungsrollen 17 sind zur besseren Schwingungsdämpfung mit einer gummielastischen Laufschicht 18 versehen, über die sie auf das Kunststoffprofil 2 einwirken, wobei sich eine Bremskraft auf die Dämpfungsrollen 17 vorteilhaft auf die Schwingungsdämpfung auswirken kann.

## Patentansprüche

1. Vorrichtung zum Kühlen und Kalibrieren eines extrudierten Kunststoffprofils (2) mit einem eine Kühlflüssigkeit aufnehmenden Kühltank (4), mit innerhalb des Kühltanks (4) mit Abstand voneinander angeordneten Kalibrierblenden (5) für das durch ein Kühlflüssigkeitsbad im Kühltank (4) gezogene Kunststoffprofil (2) und mit einer dem Kühltank (4) in Abzugsrichtung des Kunststoffprofils (2) nachgeordneten Abzugseinrichtung (7), **dadurch gekennzeichnet, daß** zwischen der zulaufseitigen Kalibrierblende (5) des Kühltanks (4) und der Abzugseinrichtung (7) wenigstens eine zumindest abschnittsweise im Bereich eines Umfangs am Kunststoffprofil (2) anliegende, Longitudinalschwingungen des Kunststoffprofils (2) dämpfende Dämpfungseinrichtung (9) vorgesehen ist, die aus zwei unmittelbar aufeinanderfolgenden, gegeneinander quer zum Kunststoffprofil (2) versetzten oder um eine Längsachse des Kunststoffprofils (2) winkelversetzten Kalibrierblenden (10, 11), aus zwei das Kunststoffprofil (2) zwischen sich führenden Dämpfungsrollen (17) oder aus einer Kalibrierblende (5) besteht, an die am Kunststoffprofil (2) anliegende Dämpfungskörper (16) angesetzt sind.

2. Vorrichtung nach Anspruch 1, **dadurch gekennzeichnet, daß** zumindest eine der Kalibrierblenden (10, 11) der Dämpfungseinrichtung (9) in Richtung ihrer Versetzung gegenüber der anderen Kalibrierblende (10, 11) federnd beaufschlagbar ist.

3. Vorrichtung nach Anspruch 1, **dadurch gekennzeichnet, daß** die Dämpfungsrollen (17) mit einer gummielastischen Laufschicht (18) am Kunststoffprofil (2) anliegen.

4. Vorrichtung nach Anspruch 3, **dadurch gekennzeichnet, daß** die Dämpfungsrollen (17) federnd an das Kunststoffprofil (2) andrückbar sind.

5. Vorrichtung nach Anspruch 1, **dadurch gekennzeichnet, daß** die Dämpfungskörper (16) zumindest im Bereich der Anlage am Kunststoffprofil (2) aus einem von der zugehörigen Kalibrierblende (5) unterschiedlichen Werkstoff bestehen.

6. Vorrichtung nach Anspruch 1 oder 5, **dadurch gekennzeichnet, daß** die Dämpfungskörper (16) federnd an das Kunststoffprofil (2) andrückbar sind.

7. Vorrichtung nach einem der Ansprüche 1 bis 6, **dadurch gekennzeichnet, daß** die Dämpfungseinrichtung (9) über Federkörper (15) auf einem Träger (14) abgestützt ist.

## Claims

1. Apparatus for cooling and calibrating an extruded plastic profile (2) with a cooling tank (4) receiving a cooling liquid with calibration diaphragms (5) spaced apart from each other within the cooling tank (4) for the plastic profile (2) drawn through a cooling liquid bath in the cooling tank (4) and with a removal device (7) arranged after the cooling tank (4) in the direction of removal of the plastic profile (2), **characterised in that** at least one damping device (9) damping longitudinal oscillations of the plastic profile (2) is disposed between the feed-side calibration diaphragm (5) of the cooling tank (4) and the removal device (7), lying against the plastic profile (2) at least section-wise in the region of a periphery, wherein the damping device (9) comprises two directly following calibration diaphragms (10, 11) offset against each other transversely to the plastic profile (2) or offset at an angle about a longitudinal axis of the plastic profile (2), two damping rollers (17) guiding the plastic profile (2) between them or one calibration diaphragm (5) on which damping members (16) lying against the plastic profile (2) are arranged.

2. Apparatus according to claim 1, **characterised in that** at least one of the calibration diaphragms (10, 11) of the damping device (9) is adapted to be resiliently impacted in the direction of its offset relative to the other calibration diaphragm (10, 11).

3. Apparatus according to claim 1, **characterised in that** the damping rollers (17) lie against the plastic profile (2) with a rubber-like running layer (18).

4. Apparatus according to claim 3, **characterised in that** the damping rollers (17) are adapted to be pressed resiliently against the plastic profile (2).

5. Apparatus according to claim 1, **characterised in that** the damping members (16) are made of a different material from the associated calibration diaphragm (5) at least in the area of abutment of the plastic profile (2).

6. Apparatus according to claim 1 or 5, **characterised in that** the damping members (16) are adapted to be pressed resiliently against the plastic profile (2).

7. Apparatus according to one of the claims 1 to 6, **characterised in that** the damping device (9) is supported on a carrier (4) by means of spring bodies (15).

## Revendications

1. Dispositif de refroidissement et de calibrage d'un profilé en matière synthétique (2) extrudé, avec un réservoir de refroidissement (4) recevant le liquide de refroidissement, avec des écrans de calibrage (5), disposés à distance les uns des autres à l'intérieur du réservoir de refroidissement (4), pour le profilé en matière synthétique (2) tiré à travers un bain de liquide de refroidissement dans le réservoir de refroidissement (4), et avec un dispositif d'extraction (7), installé en aval du réservoir de refroidissement (4) en observant dans la direction d'extraction du profilé en matière synthétique (2), **caractérisé en ce qu'**entre l'écran de calibrage (5), côté arrivée du réservoir de refroidissement (4) et le dispositif d'extraction (7) est prévu au moins un dispositif d'amortissement (9), amortissant, au moins par tronçons, des vibrations longitudinales du profilé en matière synthétique (2), s'appliquant dans.la zone d'une périphérie de ce profilé en matière synthétique (2), dispositif d'amortissement composé de deux écrans de calibrage (10, 11) se suivant directement, décalés l'un par rapport à l'autre transversalement par rapport au profilé en matière synthétique (2), ou décalés angulairement autour d'un axe longitudinal du profilé en matière synthétique (2), de deux galets d'amortissement (17), guidant entre eux le profilé en matière synthétique (2), ou d'un écran de calibrage (5), sur lequel sont appliqués des corps d'amortissement (16) appliqués sur le profilé en matière synthétique (2).

2. Dispositif selon la revendication 1, **caractérisé en ce qu'**au moins l'un des écrans de calibrage (10,11) du dispositif d'amortissement (9) est susceptible d'être sollicité élastiquement dans la direction de son décalage par rapport à l'autre écran de calibrage (10,11).

3. Dispositif selon la revendication 1, **caractérisé en ce que** les galets d'amortissement (17) sont appliqués sur le profilé en matière synthétique (2) avec une couche de défilement (18) ayant l'élasticité du caoutchouc.

4. Dispositif selon la revendication 3, **caractérisé en ce que** les galets d'amortissement (17) sont susceptibles d'être pressés élastiquement sur le profilé en matière synthétique (2).

5. Dispositif selon la revendication 1, **caractérisé en ce que** les corps d'amortissement (16) sont formés, au moins dans la zone de l'appui sur le profilé en matière synthétique (2), d'un matériau différent de celui de l'écran de calibrage (5) afférent.

6. Dispositif selon la revendication 1 ou 5, **caractérisé en ce que** les corps d'amortissement (16) sont susceptibles d'êtres pressés élastiquement sur le profilé en matière synthétique (2).

7. Dispositif selon l'une des revendications 1 à 6, **caractérisé en ce que** le dispositif d'amortissement (9) est soutenu sur un support (14), par l'intermédiaire de corps élastiques (15).
